Europäisches Patentamt

(19) European Patent Office

Office européen des brevets

(11) Numéro de publication : **0 330 546 B1**

(12) **FASCICULE DE BREVET EUROPEEN**

(45) Date de publication du fascicule du brevet :
02.10.91 Bulletin 91/40

(51) Int. Cl.$^5$ : **B60R 13/06**

(21) Numéro de dépôt : 89400413.4

(22) Date de dépôt : 14.02.89

(54) Coulisse d'étanchéité de glace mobile, notamment de vitre de véhicule automobile.

(30) Priorité : 26.02.88 FR 8802370

(43) Date de publication de la demande :
30.08.89 Bulletin 89/35

(45) Mention de la délivrance du brevet :
02.10.91 Bulletin 91/40

(84) Etats contractants désignés :
BE DE ES GB IT LU NL SE

(56) Documents cités :
DE-A- 1 955 753
FR-A- 2 551 826

(73) Titulaire : HUTCHINSON
2 rue Balzac
F-75008 Paris (FR)

(72) Inventeur : Guillon, Henri
66, Avenue de Paris
F-78740 Vaux-sur-Seine (FR)

(74) Mandataire : Brycman, Jean et al
CABINET ORES 6, Avenue de Messine
F-75008 Paris (FR)

## Description

L'invention est relative à un dispositif de guidage et d'étanchéité pour des surfaces qui peuvent être animées d'un mouvement relatif les unes par rapport aux autres, notamment des vitres ou glaces d'automobiles, généralement désigné sous le nom de coulisse de glace et qui est habituellement réalisé en matériau élastique, comme par exemple du caoutchouc ou une matière plastique, comme du PVC, logé dans un cadre métallique ayant sensiblement un profil en U et servant au maintien de la coulisse.

Ces coulisses de guidage prévues non seulement pour fournir une fonction de guidage, découlant de leur définition, mais également pour assurer l'étanchéité des surfaces mobiles vis-à-vis des agents extérieurs, notamment de la pluie mais aussi vis-à-vis du bruit, sont aussi destinées à empêcher l'introduction de toute lame, crochet, fil métallique ou autre moyen d'effraction si ténu soit-il lorsqu'ils sont utilisés sur les bords latéraux et supérieurs d'une baie de porte d'automobile propre à être obturée par une vitre ou glace coulissante.

Un grand nombre de coulisses de guidage pour vitres d'automobiles a été proposé conformément à l'art antérieur pour résoudre le double problème posé par la nécessité d'assurer l'étanchéité précitée de la surface mobile, à sa jonction avec le cadre ou châssis fixe dans lequel elle est montée, sans cependant gêner le coulissement de la surface mobile pendant son mouvement par rapport audit cadre ou châssis. La plupart des réalisations connues, voir par exemple FR-A-2551826 ou DE-A-1955753, comprennent essentiellement deux lèvres d'étanchéité portées par un profilé en forme générale de U, en matériau de plus grande dureté que celui des lèvres, celles-ci s'appliquant contre les faces respectives de la vitre et étant revêtues sur la partie de leur surface en contact avec la vitre d'un flocage ou d'un revêtement facilitant le glissement de la vitre, un flocage ou revêtement de nature analogue étant de préférence également disposé sur la surface du fond de la coulisse susceptible d'entrer en contact avec le bord de la surface mobile, que l'on désignera ci-après en tant que glace ou vitre pour simplifier l'exposé et à titre d'exemple non limitatif.

Alors que les cadres sur lesquels étaient montées ces coulisses comportaient à leurs extrémités des parties profilées sur lesquelles venaient s'emboîter des parties profilées de la coulisse, conjuguées des premières, les constructeurs de véhicules automobiles tendent à supprimer ces parties profilées des extrémités des cadres, qui se présentent alors sous la forme de simples profilés en U dont les branches se terminent par des bords francs. Que la coulisse soit fixée dans le cadre ou châssis par collage ou par serrage à force mettant à profit son élasticité ou encore, comme décrit dans FR-A-2551826, à la fois par collage et coopération de saillies extérieures aux ailes de la coulisse avec les bords du cadre, cette mise en place est une opération relativement longue et surtout délicate, une malfaçon quelconque pouvant entraîner un arrachement ultérieur de la coulisse lors du mouvement de la vitre.

L'invention a précisément pour objet une coulisse de guidage assurant une excellente étanchéité, extrêmement facile à mettre en place et totalement protégée contre tout risque de déplacement ou arrachement lors du mouvement de la vitre.

Suivant l'invention, une coulisse de guidage de vitre mobile, notamment de vitre ou glace de véhicule automobile, destinée à être montée dans un cadre sensiblement en U dont les branches se terminent par des bords francs et comportant deux lèvres d'étanchéité raccordées respectivement à deux ailes latérales reliées entre elles par une âme transversale, ladite âme étant élastiquement déformable entre une condition en laquelle la coulisse n'est pas bloquée dans le cadre et une condition de verrouillage par rapport audit cadre, est caractérisée en ce que l'âme et ses parties de liaison aux ailes latérales sont conformées suivant une genouillère agencée de manière telle que :

- ladite coulisse peut être introduite sans effort dans ledit cadre dans la condition en laquelle elle n'est pas bloquée par rapport au cadre et, que
- un appui sur ladite âme pour rendre opératoire ladite genouillère assure le verrouillage de la coulisse dans le cadre.

Suivant une variante préférée de l'invention, ladite âme comporte une échancrure sensiblement au milieu de sa face extérieure.

Suivant une autre variante de l'invention avantageusement combinée avec la précédente, des échancrures sont ménagées aux raccordements desdites ailes à ladite âme.

La coulisse suivant une autre variante de réalisation de l'invention est encore caractérisée par au moins une protubérance sur la face extérieure d'une aile, sensiblement au niveau du raccordement de l'âme aux ailes.

Suivant un mode préféré de mise en oeuvre de l'invention, la différence entre la longueur de ladite âme et l'écartement, au repos, entre les ailes est à la fois suffisamment grand pour que, en position verrouillée, une partie au moins de la partie centrale de ladite âme vienne en contact avec la base du U du cadre, et suffisamment faible pour que la base du cadre n'exerce pas de réaction sensible sur ladite âme de la coulisse.

Suivant un mode préféré de mise en oeuvre de l'invention, la partie centrale de l'âme de la coulisse est constituée d'un matériau élastique moins dur que le reste de ladite âme, ce qui facilite le verrouillage de la coulisse dans le cadre par effet de genouillère.

Suivant un autre mode préféré de mise en oeuvre de l'invention, éventuellement combiné avec le précédent, les protubérances des faces extérieures des ailes sont également constituées d'un matériau élastique moins dur que celui de l'âme dans ses parties autres que la partie centrale.

Suivant une autre variante de l'invention, éventuellement combinée avec les précédentes, lesdites lèvres sont en un matériau élastique de dureté différente, c'est-à-dire, inférieure ou supérieure à celle de l'âme et éventuellement égale à celle des protubérances et/ou de la partie centrale de l'âme, les lèvres ayant éventuellement des duretés différentes l'une et l'autre.

Suivant une autre variante de l'invention, la coulisse est sensiblement symétrique par rapport à un plan moyen longitudinal.

Les parties de la coulisse venant en contact avec la vitre sont avantageusement pourvues d'un revêtement facilitant le glissement. Celui-ci, comme connu, est avantageusement en une matière plastique à faible coefficient de frottement, comme par exemple une polyoléfine ou du polytétrafluoréthylène, de préférence réalisé par co-extrusion de la polyoléfine ou du polytétrafluoroéthylène avec l'élastomère ou le plastomère constituant les différentes parties de la coulisse sur lesquelles il est placé.

L'invention sera mieux comprise et d'autres caractéristiques apparaîtront à la lecture de la description qui suit, faite en référence au dessin annexé dans lequel :

— la figure 1 est une vue partielle d'une automobile, montrant un exemple d'application de l'invention ;

— la figure 2 est une vue à échelle très agrandie en coupe, montrant la coulisse posée dans son cadre, préalablement à sa mise en place définitive ; et

— la figure 3 est une vue à même échelle que la précédente en coupe selon la ligne 3-3 de la figure 1 montrant la coulisse bloquée dans son cadre.

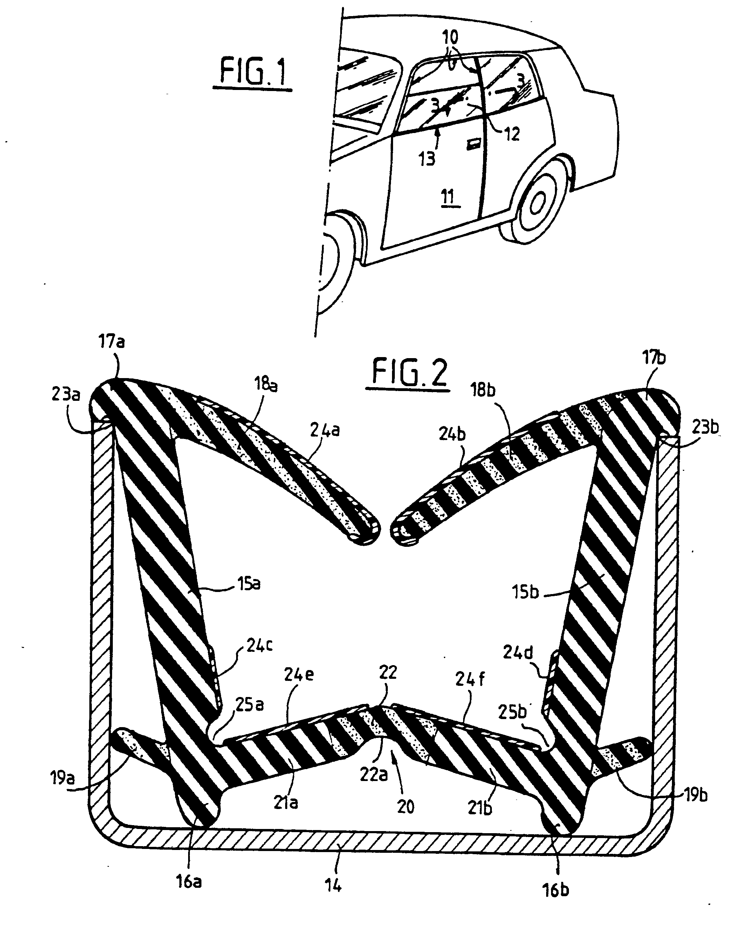

Sur la porte 11 d'une automobile montrée partiellement figure 1, la vitre 12 est représentée en position semi-baissée. L'étanchéité inférieure à la pluie, au sable, à la poussière et plus généralement vis-à-vis de l'introduction de tout élément ou particule solide, liquide ou gazeuse ainsi qu'aux ondes sonores de la baie propre à être obturée par la vitre ou glace 12 est assurée par au moins un lécheur 13, tandis que l'étanchéité supérieure et latérale de cette vitre est assurée simultanément à son guidage par des coulisses telles que 10, fixées dans des cadres généralement métalliques, profilés en U et solidaires de la portière du véhicule sauf dans le cas de cabriolets où l'une au moins des coulisses est généralement solidaire d'un montant fixe.

On voit un tel cadre en 14 sur la figure 2 où la coulisse 10 est représentée à une échelle très agrandie avant son blocage dans le cadre. Selon l'invention, la coulisse est constituée par :

- deux ailes 15a, 15b en un matériau élastomère ou plastomère comme du caoutchouc ou du PVC ayant des extrémités respectives 16a, 16b reposant sur la base du U du cadre 14 et éventuellement en appui sur celui-ci lorsque la coulisse est verrouillée, et des extrémités 17a, 17b, plus éloignées l'une de l'autre que les extrémités 16a, b et reposant sur les parties supérieures des branches du U du cadre, en s'y appuyant lorsque la coulisse est verrouillée en place dans celui-ci ;

- deux lèvres d'étanchéité 18a, 18b en le même matériau que celui des ailes ou, de préférence, en un matériau de même type ou de type différent mais moins dur que celui des ailes 15 et ainsi plus facilement déformable ;

- deux protubérances ou nervures 19a, 19b également réalisées en le même matériau que celui des ailes 15 ou, de préférence, en un matériau de même type ou de type différent mais moins dur que celui des ailes, et éventuellement identique à celui des lèvres ;

- une âme 20 reliant les deux ailes 15 et raccordée à celles-ci à proximité de leurs extrémités 17a, 17b mais en retrait (au-dessus dans l'orientation de la figure) de celles-ci, et comportant deux parties latérales symétriques 21a, 21b réalisées, dans cet exemple, dans le même matériau dur que les ailes séparées par une partie centrale 22 réalisée dans un matériau de préférence moins dur que celui des parties latérales avec un évidement 22a à sa partie inférieure dans l'orientation de la figure, et plus généralement sur celle de ses faces qui est en vis-à-vis de la base du U du cadre 14.

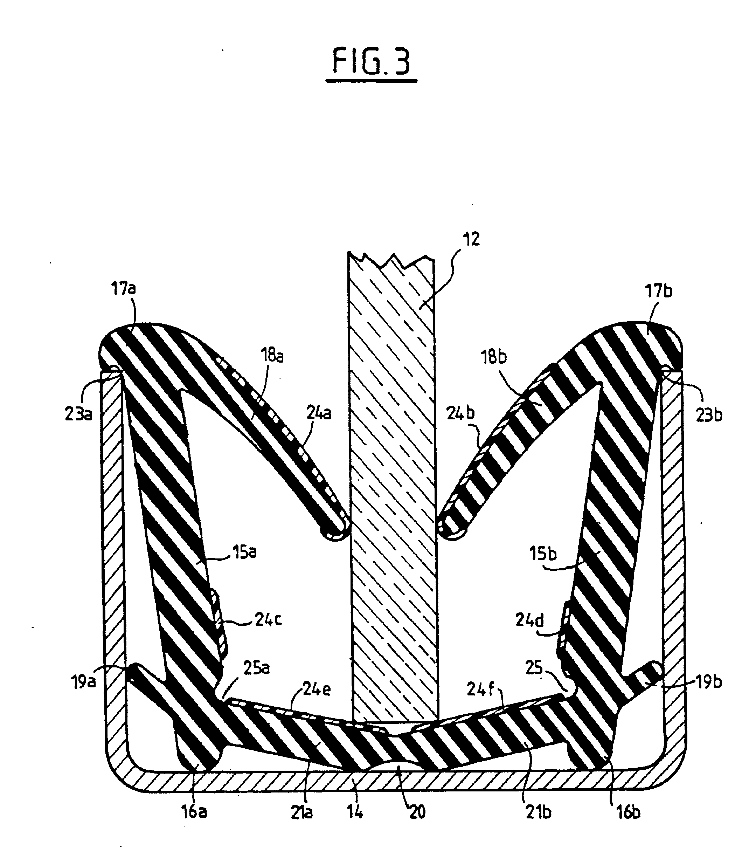

La longueur développée de l'âme 20 est supérieure à la distance entre les ailes 15a, b au niveau de leur raccordement à la base, et les parties latérales 21a, b sont sensiblement perpendiculaires respectivement aux deux ailes, si bien que la partie centrale 22 est quelque peu analogue à une genouillère. Sous l'effet d'une pression momentanée appliquée par une tige ou autre outil approprié pour être glissé entre les lèvres et appuyer sur la partie centrale 22, l'âme 20 initialement dans la position représentée figure 2, prend la position représentée à la figure 3 et demeure en permanence dans cette position, après le retrait de l'outil.

Au blocage de la coulisse dans le cadre 14 contribue le frottement des extrémités des protubérances ou nervures 19a, b sur les branches en U dudit cadre.

Le verrouillage de la genouillère entraîne en outre une rotation des ailes 15a, b autour des arêtes vives 23a, 23b des extrémités des branches du cadre 14, rotation qui en créant un effet de coin par enfoncement de ces arêtes dans le matériau de la coulisse, a pour effet de renforcer le blocage de cette dernière.

Les lèvres 18, ainsi que diverses parties des ailes 15 et de l'âme 20 avec lesquelles la vitre ou glace 12 est susceptible de venir en contact sont revêtues d'un matériau améliorant le glissement de celle-ci, représenté en 24a, 24b, 24c, 24d, 24e, 24f, sur les figures 2 et 3, par exemple une polyoléfine ou du polytétrafluoroethylène tandis que, le ou les matériaux de moins grande dureté des lèvres 18, de l'âme 20 ainsi que des nervures 19 est (sont) représentés sous forme de hachûres et de points pour les distinguer du matériau constituant le reste de la coulisse, de préférence mais non exclusivement plus dur et avantageusement choisi parmi les élastomères ou les plastomères.

La coulisse est de préférence réalisée par coextrusion des divers matériaux mis en jeu, un tel procédé permettant notamment d'obtenir facilement sous forme d'échancrures 25a, 25b les raccords entre les ailes 15 et l'âme 20, ainsi que l'échancrure 22a de la partie centrale de l'âme 20, qui facilitent la manoeuvre de la genouillère.

L'invention n'est évidemment pas limitée aux modes de réalisation décrits et/ou représentés, ni à son application à des coulisses de vitre ou glace d'automobile mais s'applique généralement à toute coulisse pour surface mobile devant être maintenue en place dans un cadre en U et avantageusement dans un cadre en U exempt de profils d'accrochage de la coulisse.

Les divers matériaux peuvent être choisis dans de très larges gammes ; leur choix sera fait notamment en fonction des conditions d'utilisation, les matériaux de glissement des deux lèvres pouvant être différents si les deux faces de la surface en mouvement ne sont pas de même nature, par exemple si les deux faces ont été traitées différemment.

**Revendications**

1. Coulisse de guidage de vitre mobile, notamment de vitre ou glace (12) de véhicule automobile, destinée à être montée dans un cadre (14) sensiblement en U dont les branches se terminent par des bords francs et comportant deux lèvres d'étanchéité (18a, 18b) raccordées respectivement à deux ailes latérales (15a, 15b) reliées entre elles par une âme transversale (20), ladite âme (20) étant élastiquement déformable entre une condition dans laquelle la coulisse n'est pas bloquée dans le cadre (14) et une condition de verrouillage par rapport audit cadre, caractérisée en ce que l'âme (20) et ses parties de liaison (21a, 21b) aux ailes latérales (15a, 15b) sont conformées suivant une genouillère agencée de manière telle que :

ladite coulisse peut être introduite sans effort dans ledit cadre (14) dans la condition en laquelle elle n'est pas bloquée par rapport au cadre et, que
un appui sur ladite âme (20) pour rendre opératoire ladite genouillère assure le verrouillage de la coulisse dans le cadre (14).

2. Coulisse suivant la revendication 1, caractérisée en ce que ladite âme (20) comporte une échancrure (22a) sensiblement au milieu de sa face extérieure.

3. Coulisse suivant la revendication 1 ou la revendication 2, caractérisée en ce que des échancrures (25, 25a) sont ménagées aux raccordements desdites ailes (15a, 15b) à ladite âme (20).

4. Coulisse suivant l'une quelconque des revendications 1 à 3, caractérisée par au moins une protubérance (19a, 19b) sur la face extérieure d'une aile (15a, 15b) sensiblement au niveau du raccordement de l'âme aux ailes.

5. Coulisse suivant l'une quelconque des revendications 1 à 4, caractérisée en ce que la différence entre la longueur de ladite âme (20) et l'écartement, au repos, entre les ailes (15a, 15b) est à la fois suffisamment grand pour que, en position verrouillée, une partie au moins de la partie centrale de ladite âme (20) vienne en contact avec la base du U du cadre (14) et suffisamment faible pour que la base dudit cadre (14) n'exerce pas de réaction sensible sur ladite âme de la coulisse.

6. Coulisse suivant l'une quelconque des revendications 1 à 5, caractérisée en ce que la partie centrale (22) de l'âme (20) de la coulisse est constituée d'un matériau élastique moins dur que le reste de ladite âme pour faciliter le verrouillage de la coulisse dans le cadre (14) par effet de genouillère.

7. Coulisse suivant l'une quelconque des revendications 4, ou 5 et 6 telles que rattachées à la revendication 4, caractérisée en ce que les protubérances (19a, 19b) des faces extérieures des ailes (15a, 15b) sont également constituées d'un matériau élastique moins dur que celui de l'âme (20) dans ses parties autres que la partie centrale (22).

8. Coulisse suivant l'une quelconque des revendications 1 à 7, caractérisée en ce que les lèvres d'étanchéité (18a, 18b) sont en un matériau élastique de dureté différente, c'est-à-dire inférieure ou supérieure à celle de l'âme (20) et éventuellement égale à celle des protubérances (19a, 19b) ou de la partie centrale (22) de l'âme (10), lesdites lèvres ayant éventuellement des duretés différentes l'une de l'autre.

9. Coulisse suivant l'une quelconque des revendications 1 à 8, caractérisée en ce qu'elle est sensiblement symétrique par rapport à un plan moyen longitudinal.

10. Coulisse suivant l'une quelconque des revendications 1 à 9, caractérisée en ce qu'elle est réalisée en un ou plusieurs matériaux choisis parmi les élastomères et/ou les plastomères.

11. Coulisse suivant l'une quelconque des revendications 1 à 10, caractérisée en ce qu'elle comporte au moins sur une partie des lèvres d'étanchéité (18) un revêtement (24a, 24b) facilitant le glissement, un tel revêtement (24c, 24d, 24e, 24f) étant aussi avantageusement prévu sur au moins une partie de la surface intérieure des ailes (15) ou de l'âme (20).

## Patentansprüche

1. Gleitführung zur Führung einer beweglichen Fensterscheibe, insbesondere einer Fensterscheibe oder eines Wagenfensters (12) eines Kraftfahrzeugs, die dazu bestimmt ist, in einem im wesentlichen U-förmigen Rahmen (14), dessen Schenkel in freien Rändern enden, montiert zu werden und die zwei Abdichtungslippen (18a, 18b) hat, die jeweils mit zwei seitlichen Flügeln (15a, 15b) verbunden sind, welche untereinander durch einen Quersteg (20) verbunden sind, wobei der erwähnte Steg (20) elastisch zwischen einem Zustand, in dem die Gleitführung in dem Rahmen (14) nicht blockiert ist, und einem Zustand der Blockierung, bezogen auf den Rahmen, deformierbar ist, dadurch **gekennzeichnet**, daß der Steg (20) und seine Verbindungteile (21a, 21b) mit den seitlichen Flügeln (15a, 15b) einem Kniegelenk entsprechen, das so gestaltet ist, daß die Gleitführung in dem Zustand, in dem sie, bezogen auf den Rahmen, nicht blockiert ist, ohne Anstrengung in den Rahmen (14) eingebracht werden kann, und daß eine Auflage auf den erwähnten Steg (20) zur Herstellung der Funktionsfähigkeit des erwähnten Kniegelenks die Blockierung der Gleitführung in dem Rahmen (14) sicherstellt.

2. Gleitführung nach Anspruch 1, dadurch **gekennzeichnet**, daß der erwähnte Steg (20) eine Aussparung (22a) im wesentlichen in der Mitte seiner Außenseite hat.

3. Gleitführung nach Anspruch 1 oder Anspruch 2, dadurch **gekennzeichnet**, daß Aussparungen (25, 25a) an den Verbindungen der Flügel (15a, 15b) mit dem erwähnten Steg (20) angeordnet sind.

4. Gleitführung nach irgendeinem der Ansprüche 1 bis 3, **gekennzeichnet** durch wenigstens einen Vorsprung (19a, 19b) auf der Außenseite eines Flügels (15a, 15b), im wesentlichen auf dem Niveau der Verbindung des Stegs mit den Flügeln.

5. Gleitführung nach irgendeinem der Ansprüche 1 bis 4, dadurch **gekennzeichnet**, daß die Differenz zwischen der Länge des erwähnten Stegs (20) und der Entfernung, in Ruhe, zwischen den Flügeln (15a, 15b) gleichzeitig groß genug ist, daß, in blockierter Position, ein Teil von wenigstens dem mittigen Teil des erwähnten Stegs (20) in Kontakt mit der Basis des U-förmigen Rahmens (14) kommt, und gering genug ist, daß die Basis des Rahmens (14) keine wesentliche Reaktion auf den erwähnten Steg der Gleitführung ausübt.

6. Gleitführung nach irgendeinem der Ansprüche 1 bis 5, dadurch **gekennzeichnet**, daß der mittige Teil (22) des Stegs (20) der Gleitführung aus einem elastischen Material gebildet ist, das weniger hart als der Rest des erwähnten Stegs ist, um die Blockierung der Gleitführung in dem Rahmen (14) durch die Wirkung des Kniegelenks zu erleichtern.

7. Gleitführung nach irgendeinem der Ansprüche 4, oder 5 und 6 in Verbindung mit dem Anspruch 4, dadurch **gekennzeichnet**, daß die Vorsprünge (19a, 19b) der Außenseiten der Flügel (15a, 15b) ebenfalls aus einem elastischen Material gebildet sind, das weniger hart ist als dasjenige des Stegs (20) in seinen anderen Teilen, als dem mittigen Teil (22).

8. Gleitführung nach irgendeinem der Ansprüche 1 bis 7, dadurch **gekennzeichnet**, daß die Abdichtungslippen (18a, 18b) aus einem elastischen Material von unterschiedlicher Härte, d.h. kleiner oder größer als diejenige des Stegs (20) und eventuell gleich derjenigen der Vorsprünge (19a, 19b) oder des mittigen Teils (22) des Stegs (20) sind, wobei die Lippen gegebenenfalls voneinander unterschiedliche Härten haben.

9. Gleitführung nach irgendeinem der Ansprüche 1 bis 8, dadurch **gekennzeichnet**, daß sie im wesentlichen symmetrisch mit Bezug auf eine Längsmittelebene ist.

10. Gleitführung nach irgendeinem der Ansprüche 1 bis 9, dadurch **gekennzeichnet**, daß sie aus einem oder mehreren Materialien, ausgewählt aus den Elastomeren und/oder den Plastomeren, hergestellt ist.

11. Gleitführung nach irgendeinem der Ansprüche 1 bis 10, dadurch **gekennzeichnet**, daß sie wenigstens auf einem Teil der Abdichtungslippen (18) einen Überzug (24a, 24b) hat, der das Gleiten erleichtert, wobei ein solcher Überzug (24c, 24d, 24e, 24f) auch vorteilhafterweise auf wenigstens einem Teil der Innenfläche der Flügel (15) oder des Stegs (20) vorgesehen ist.

## Claims

1. A slideway for guiding a moving window, in particular a window or glass (12) in a motor vehicle, the slideway being intended to be mounted in a generally channel-section support (14) having branches terminated by simple edges, the slideway including two sealing lips (18a, 18b) connected respectively to two side flanges (15a, 15b) which are interconnected by a transverse web (20), said web (20) being resiliently deformable between a rest state in which the slideway is not locked in the support (14) and a locked state in which said slideway is locked in said support, said slideway being characterized in that the web (20) and its portions (21a, 21b) connecting with the side flanges (15a, 15b) are shaped to constitute a toggle-action linkage which is disposed in such a way that :

said slideway can be inserted without force into said support (14) when in its rest state in which the slideway is not locked in the support ; and said slideway can be locked in the support (14) by operating said toggle-action linkage by pressing against said web (20).

2. A slideway according to claim 1 characterized in that said web (20) includes a groove (22a) running substantially along the middle of its outside face.

3. A slideway according to claim 1 or claim 2, characterized in that grooves (25a, 25b) are provided where said flanges (15a, 15b) meet said web (20).

4. A slideway according to any one of claims 1 to 3, characterized by at least one projection (19a, 19b) from the outside face of a flange (15a, 15b), substantially level with the connection between the flanges and the web.

5. A slideway according to any one of claims 1 to 4, characterized in that the difference between the width of said web (20) and the distance between said flanges (15a, 15b) when in the rest position is both sufficiently large to ensure that at least a part of the central portion of said web (20) comes into contact with the base of the channel-section support (14) when the slideway is in the locked position, and sufficiently small to ensure that the base of the channel-section support (14) does not exert any substantial reaction against said web of the slideway.

6. A slideway according to any one of claims 1 to 5, characterized in that the central portion (22) of the web (20) of the slideway is constituted by a resilient material which is less hard than the remainder of said web, thereby facilitating the locking of the slideway in the support (14) by the toggle effect.

7. A slideway according to any one of claims 4, or 5 and 6 as dependent on claim 4, characterized in that the projections (19a, 19b) on the outside faces of the flanges (15a, 15b) are likewise made of a resilient material which is less hard than the material constituting the web (20) in its portions other than its central portion (22).

8. A slideway according to any one of claims 1 to 7, characterized in that the said sealing lips (18a, 18b) are made of a resilient material of hardness which is different from (i.e. less than or greater than) the hardness of the web (20) and possibly equal to the hardness of the projections (19a, 19b) or the central portion (22) of the web (20), said lips not necessarily having the same hardness as each other.

9. A slideway according to any one of claims 1 to 8, characterized in that it is substantially symmetrical about a longitudinal midplane.

10. A slideway according to any one of claims 1 to 9, characterized in that it is made of one or more materials selected from elastomers and/or plastomers.

11. A slideway according to any one of claims 1 to 10, characterized in that it includes a coating (24a, 24b) facilitating sliding and formed on at least a portion of the sealing lips (18), such a coating (24c, 2d, 24e, 24f) advantageously also being provided on at least a portion of the inside surface of the flanges (15) or of the web (20).

FIG.1

FIG.2

# FIG.3